Europäisches Patentamt

European Patent Office

Office européen des brevets

(11) Numéro de publication: **0 373 091**

**A1**

## (12) DEMANDE DE BREVET EUROPEEN

(21) Numéro de dépôt: **89500122.0**

(22) Date de dépôt: **01.12.89**

(51) Int. Cl.5: **B65G 59/02**

(30) Priorité: **02.12.88 FR 8816408**

(43) Date de publication de la demande:
**13.06.90 Bulletin 90/24**

(84) Etats contractants désignés:
**AT BE CH DE ES GB IT LI NL SE**

(71) Demandeur: **Marti Sala, Jaime
Emancipacion n. 8
E-08017 Barcelona(ES)**

(72) Inventeur: **Marti Sala, Jaime
Emancipacion n. 8
E-08017 Barcelona(ES)**

(74) Mandataire: **Manresa Medina, Enrique
34, Gerona
E-08010 Barcelona(ES)**

(54) **Dispositif et procédé d'alimentation en vrac d'une machine de redressement et d'alignement de récipients couplée à une chaîne d'embouteillage.**

(57) L'invention concerne un dispositif et un procédé d'alimentation en continu, d'une ligne d'embouteillage, à partir de bouteilles en matériau léger (23), initialement disposées ordonnées sur des plateaux ou dans des conditionnements divers (22) empilés sur une palette (21), avec contribution de:

a) un dispositif (1) comportant des moyens permettant la saisie de groupes de bouteilles avec leur conditionnement, la séparation desdites bouteilles de leur conditionnement, leur récuperation en vrac, l'évacuation des conditionnements;

b) une machine automatique (2) de redressement et d'alignement de récipients, alimentée par les bouteilles en vrac provenant du dispositif précédent et couplée à la ligne d'embouteillage (25).

FIG 1

EP 0 373 091 A1

# DISPOSITIF ET PROCÉDÉ D'ALIMENTATION EN VRAC D'UNE MACHINE DE REDRESSEMENT ET D'ALIGNEMENT DE RÉCIPIENTS COUPLÉE À UNE CHAÎNE D'EMBOUTEILLAGE

L'invention concerne à un dispositif et procédé d'alimentation, en continu, d'une chaîne d'embouteillage à partir de groupes de bouteilles ou de récipients divers, réalisés en matériau léger tel de la matière plastique, initialement disposés ordonnés sur des plateaux ou dans des conditionnements divers empilés sur une pallette.

Les dispositifs connus destinés à transférer des bouteilles en matière plastique vers une ligne d'embouteillage sont du type déjà utilisé pour les bouteilles en verre à savoir : une table d'accumulation couramment constituée par une pluralité de convoyeurs, adyacents et coplanaires, couplés à un convoyeur unique de sortie. Autrement-dit, les bouteilles, initialement verticales, sont manipulées verticalement jusqu'à la ligne d'embouteillage et tout est mis en oeuvre pour qu'elles le demeurent.

Si pour les bouteilles en verre de tels dispositifs sont au point et donnents d'excelents résultats, il n'en est malheuresement pas de même pour les bouteilles en matériau léger, tel de la matière plastique, qui, de par leur flexibilité et légéreté, provoquent des obstructions et des écrasements avec pour conséquence la chute desdites bouteilles. De tels inconvénients exigent du personnel de surveillance et de manuntention légère en nombre non négligeable. En outre de tels équipements mettent en oeuvre des investissements importants auxquels s'ajoutent les frais en personnel suplémentaire.

On connaît à partir des brevets USA nos. 2.729.344 et 3.543.949 et FR 2.585.681, des dispositifs qui proposent des moyens pour la transférence de récipients divers, initialement disposés en position verticale sur des plateaux empilés sur una table d'elevation, se déplaçant palier par palier, vers une table d'accumulation comme la décrite antérieurement, à partir de laquelle et en utilisant un cla sseur (USA 2.729.344), elles sont envoyés à un convoyeur unique de sortie.

Touts ces dispositifs ont une adaptation difficile à des récipients tels que bouteilles en matière plastique et ils sont completement inadécuats pour bouteilles avec son fond plus étroit que le corps, de baisse stabilité, comportant touts les inconvénients mentionnés.

L'ensemble, selon l'invention, a l'avantage de remédier à ces divers inconvénients en mettant en oeuvre un dispositif destiné à transférer, en vrac, les bouteilles, initialement disposées ordonées dans des conditionnements divers, vers une machine de redressement et d'alignement d'un type classique, comme par exemple celle décrite dans le brevet FR 2 543 926 et la demande française no 87.18194 du même déposant. La combinaison de ces deux moyens permet de garantir, a l'ensemble, un fonctionnement correct prouvé par les machines de redressement et d'alignement, la possibilité d'obtenir des cadences élevées, pour un investissement beaucoup moins onéreux et ne nécessitant pas de personnel de surveillance.

En effet, l'invention concerne un ensemble comportant, en combinaison:

a) un dispositif comportant des moyens permettant la saisie de groupes de bouteilles, la séparation de ces dernières de leur conditionnement, leur récuperation en vrac, l'evacuation des conditionnements;

b) une machine automatique de redressement et d'alignement de récipients, alimentée par les bouteilles en vrac provenant du dispositif précédent et couplée à la ligne d'embouteillage.

Le dispositif en question comporte quant à lui:

a)une table d'élévation, support de palette, se déplaçant verticalement, palier par palier;

b) au moins une pince à mâchoires destinée à saisir le conditionnement et son contenu, possédant des moyens aptes à retourner l'ensemble pour en libérer les bouteilles et à retenir le conditionnement pour son évacuation;

c) une trémie de récuperation des bouteilles couplée à une bande transporteuse élévatrice alimentant la machine de redresement et d'alignement.

D'autres caractéristiques et avantages vont apparaître à la lecture de la description détaillée qui suit d'un mode de réalisation préféré de l'invention donné à titre d'exemple et représenté aux dessins annexés.

Sur ces dessins:

- la figure 1 est une vue d'ensemble du dispositif selon l'invention couplé à une machine automatique de redressement et d'alignement de bouteilles;

- les figures 2 à 8 sont des vues successives du fonctionnement du dispositif, selon l'invention, tel qu'il sera décrit, phase par phase, en se référant aux dessins, ci-après.

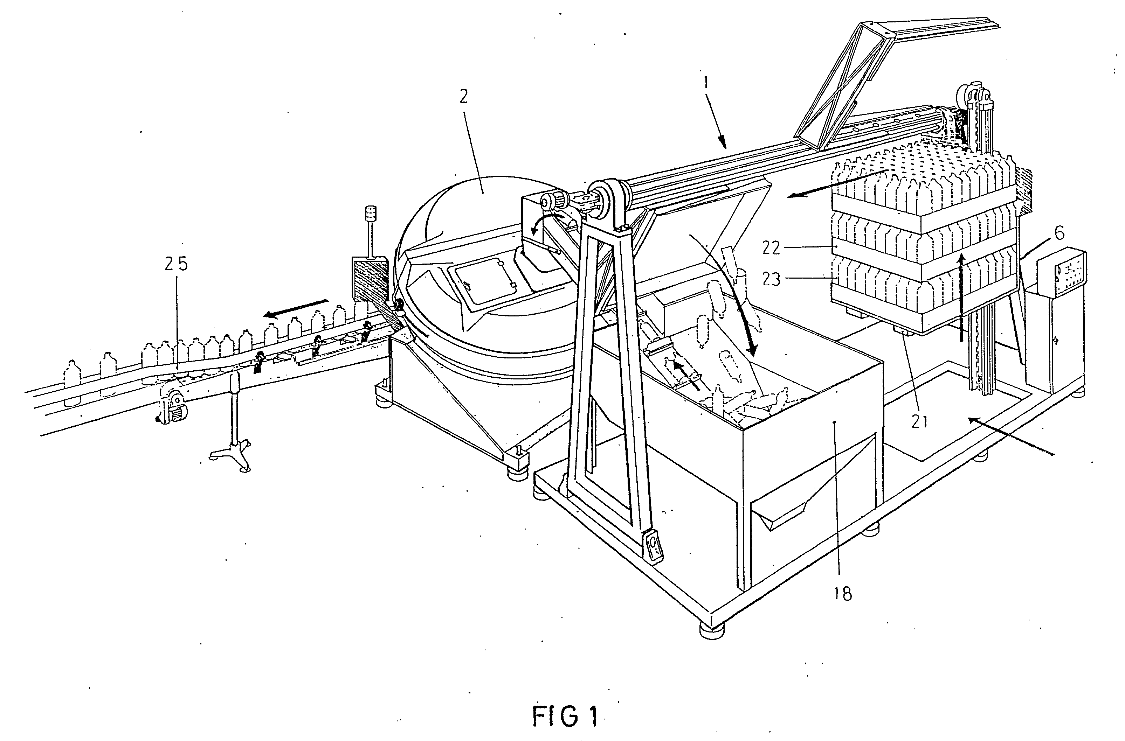

L'ensemble, représenté à la figure 1, comporte:

I - un dispositif -1- permettant la séparation des bouteilles de leur conditionnement, la récuperation en vrac de celles-ci et l'evacuation des conditionnements;

II - une machine -2- de redressement et d'alignement de bouteilles, du type réceptacle de chargement, chariots porteurs de récipients, plan fixe avec ouverture d'évacuation, goulottes d'évacuation par gravité, dont les détails n'ont pas été représentés pour des raisons de commodité (ils sont décrits dans les brevets pré-cités), alimentée par les bouteilles en vrac provenant du dispositif précedent et couplée à la ligne d'embouteillage -25-.

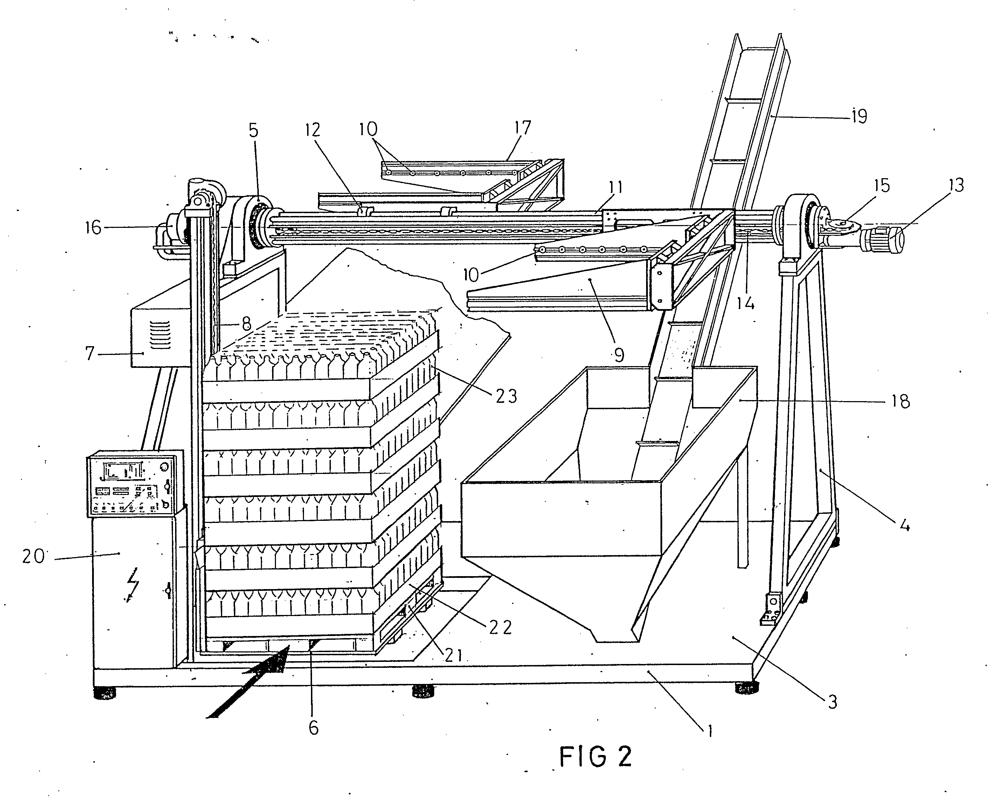

Le dispositif, représenté aux figures 2 à 8, comporte une plateforme -3-, surélevée d'un portique -4- soutenant une poutre -5-; une table d'élévation -6-, commandée par une motorisation -7- et une chaîne -8-, se déplaçant,palier par palier, d'une hauteur correspondant à celle d'un conditionnement avec détection de niveau de manière à être en position de préhension par le moyen correspondant du dispositif; au moins une pince à mâchoires -9- dont les bras sont réglables en largeur et comportant des moyens de rétention -10-, tels des ventouses, du conditionnement, principalement une fois vidé de son contenu : ladite pince étant solidaire de la poutre -5- par l'intermédiaire d'un guide, tel un ensemble "arbres -11-, moyeux -12-" et d'une cinematique, telle un ensemble "moto-réducteur -13- chaîne sans fin -14- pignons -15", animée d'un mouvement de va et vient longitudinal : la poutre étant quant à elle animee d'un mouvement de rotation, par paliers de 180 degrés, grâce à un moyen, tel un moto-réducteur -16-;éventuellement une deuxième pince à mâchoires -17-, du même type que la précedente, montée en opposition par rapport à la première de telle manière que:

a) lorsque la première pince est dans la zone de chargement la deuxième est dans la zone de déchargement, et réciproquement;

b) lorsque la première évacue, par retournement, les bouteilles, la deuxième vient saisir le conditionnement suivant, et réciproquement;
une trémie de récuperation -18- des bouteilles en vrac avec une bande transporteuse élévatrice -19-; une bande transporteuse -24- de récupération des conditionnements vides; le tout étant géré par une armoire de contrôle et de commande -20-.

Le fonctionnement de l'ensemble est le suivant:

- figure 2 : introduction des palettes -21- sur la table élévatrice;

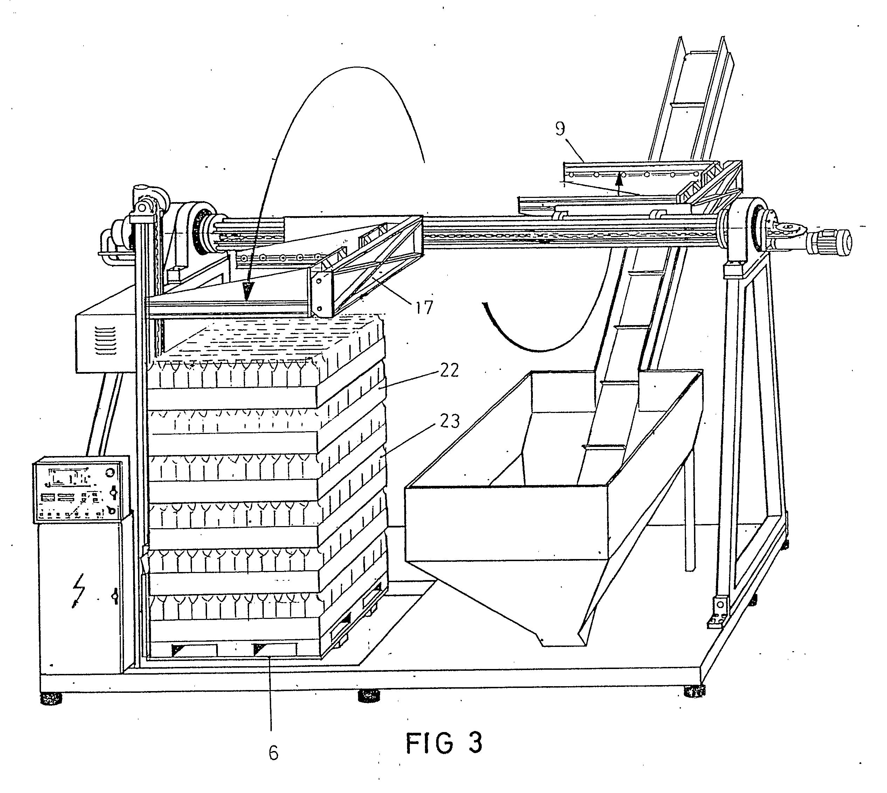

- figure 3 : positionnement de la pince -17-, par retournement, à la verticale d'un conditionnement à saisir -22-;

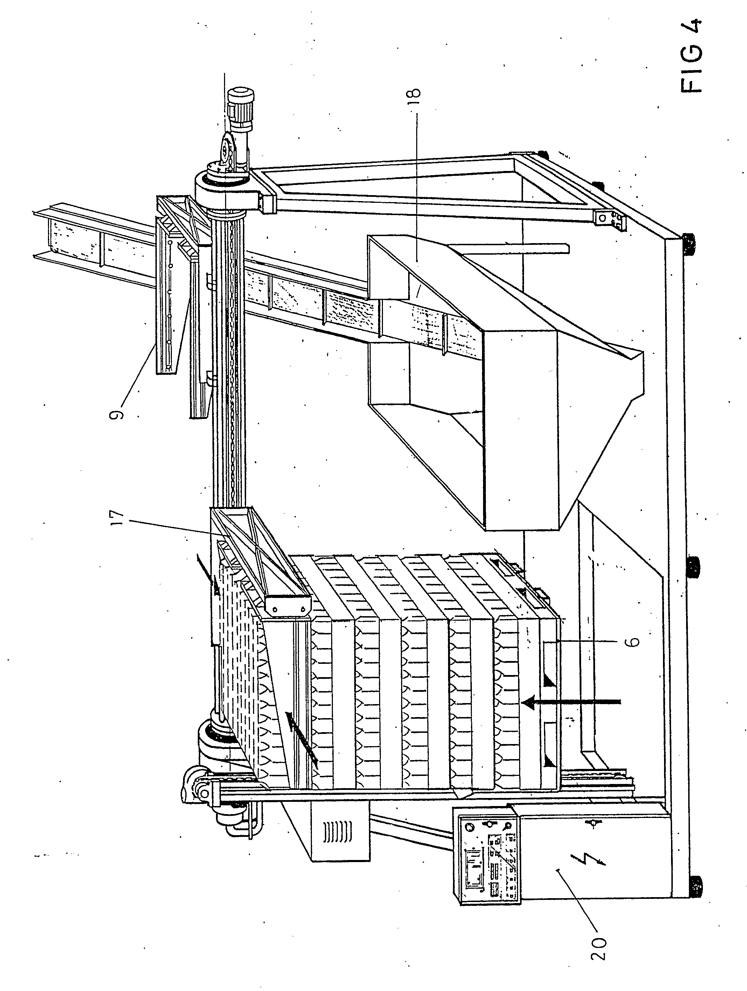

- figure 4 : déplacement vertical de la table élévatrice d'un palier avec prise du conditionnement et de son contenu par les mâchoires de la pince -17-;

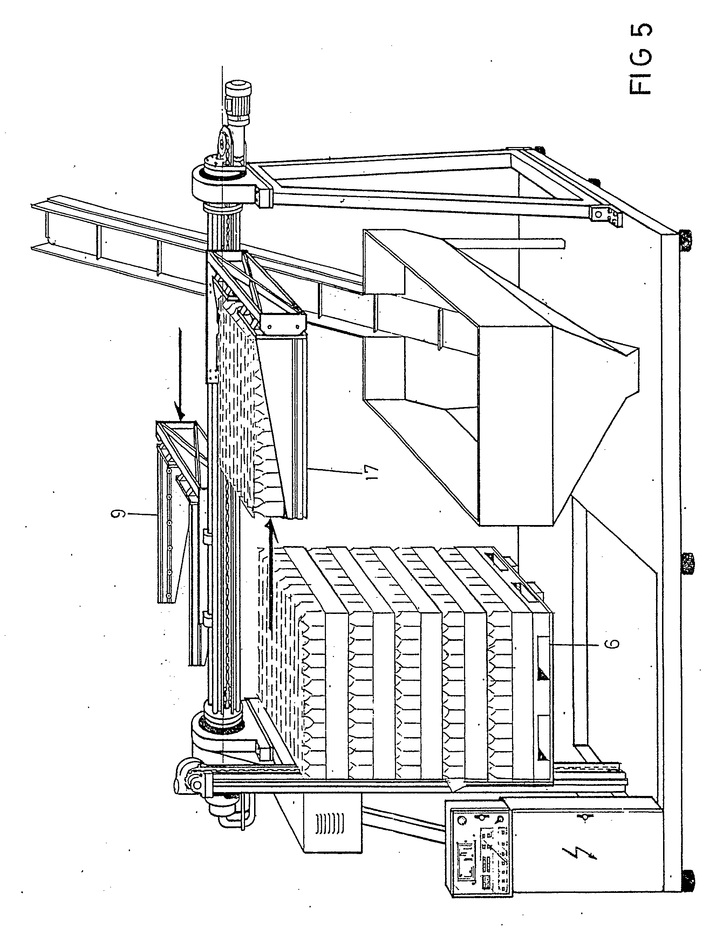

- figure 5 : déplacement de ladite pince -17- jusqu'à la zone de récupération des bouteilles, alors que la pince -9-se déplace en sens inverse;

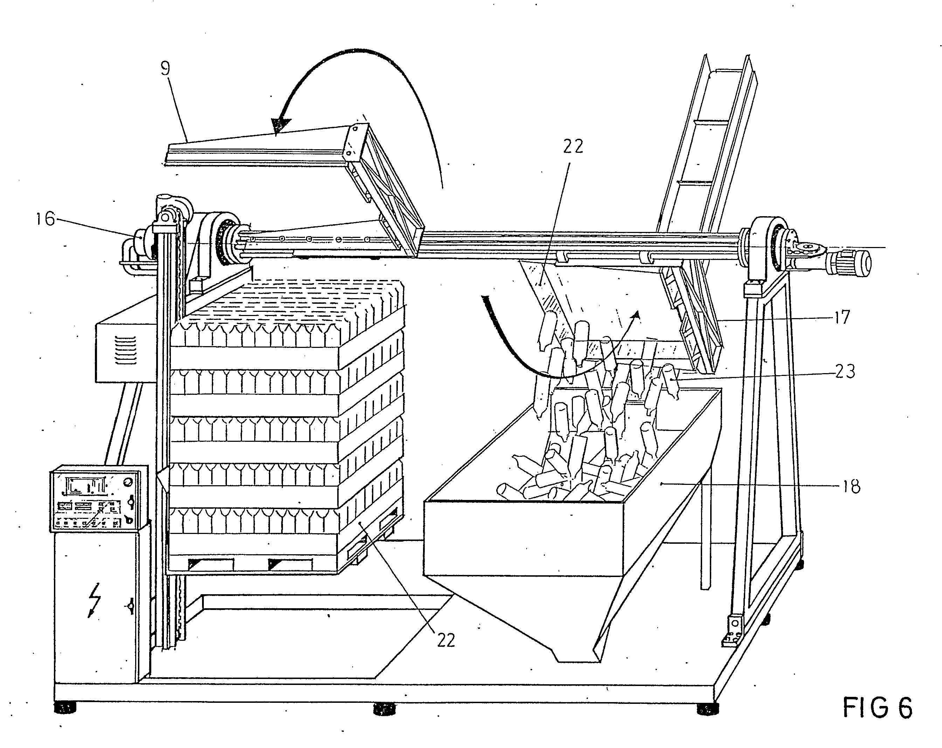

- figure 6 : rotation de 180 degrés de la pince -17- qui libère les bouteilles -23- tout en maintenant le conditionnement grâce aux ventouses, alors que la pince -9- va se placer en position de préhension;

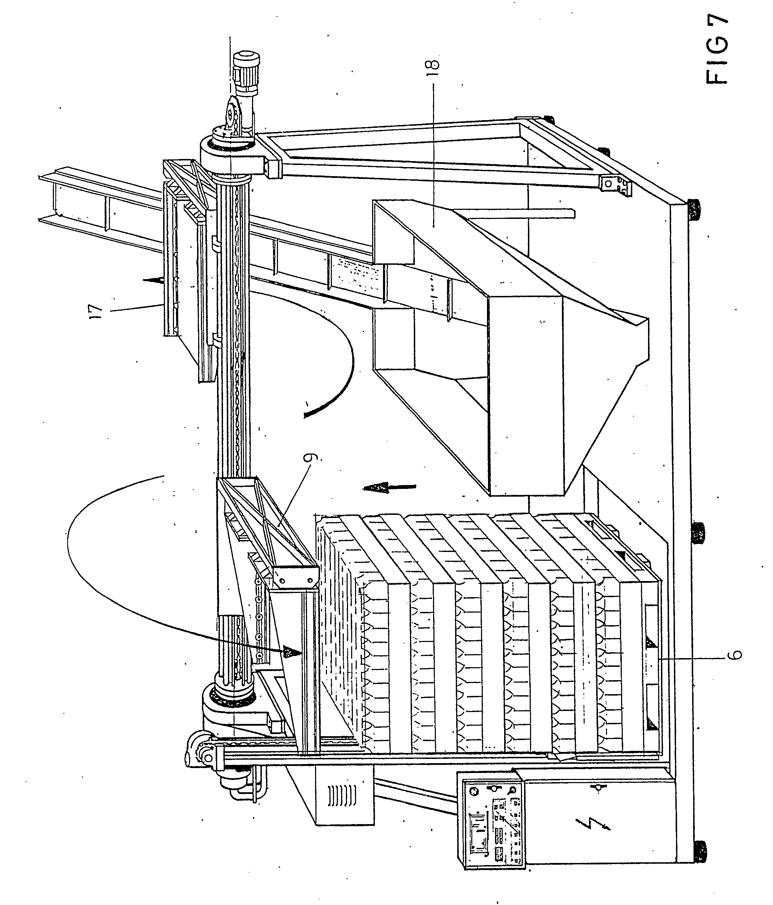

- figure 7 : déplacement de la table élévatrice d'un nouveau palier avec prise d'un nouveau conditionnement par la pince -9-;

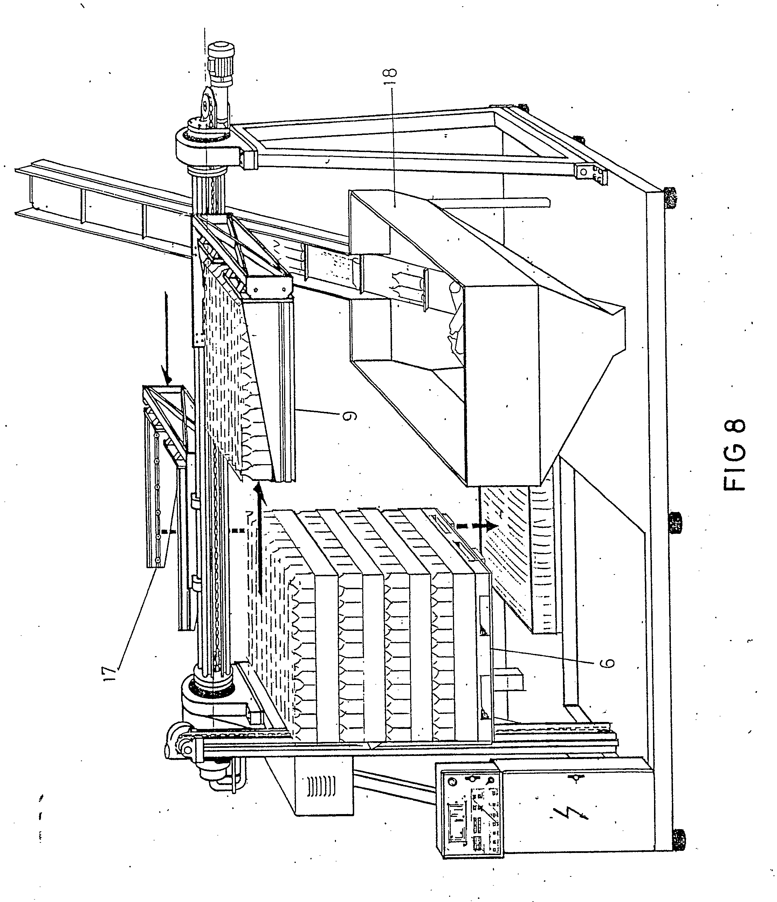

- figure 8 : déplacement de la pince -9- vers la zone de récuperation des bouteilles alors que la pince -17- se déplace vers la zone de récupération des conditionnements (écartement des mâchoires); et le cycle continue

Bien entendu l'invention n'est pas limitée au mode de réalisation décrit et représenté pour lequel on pourra prevoir d'autres variantes sans pour cela sortir du cadre de l'invention, en particulier:

- le conditionnement pourra être un plateau, posséder un couvercle qu'il faudra éventuellement enlever au préalable, ...

- la pince à mâchoires pourra être constituée par un ou plusieurs bras, posséder d'autres moyens de rétention que des ventouses : système adhésif, à crochets, ...

- la pince pourra être directement couplée à la machine de redressement et d'alignement, sans passer par la trémie de récupération;

- les moyens d'entraînement pourront être de tout autre type : verins -10- hydrauliques ou pneumatiques par exemple.

**Revendications**

1.- Dispositif pour l'alimentation en vrac d'une machine de redressement et d'alignement de récipients couplée à une chaîne d'embouteillage, lesdits récipients étant disposés en position verticale sur le fond de conditionnemens divers empilés sur une table élévatrice se déplaçant palier par palier, ledit dispositif comportant des moyens aptes à dépalettiser, niveau par niveau, lesdits conditionnements et récipients, **caractérisé** en ce que les moyens aptes à dépaletiser les conditionnements -22- et les récipients -23-sont constitués par une pince à mâchoires -9- que possède des moyens aptes à saisir chaque conditionnement porteur des récipients et à le retourner pour en libérer, par gravité, lesdits récipients tout en retenant le conditionnement pour en permettre son évacuation, et en ce que les dits moyens de dépalettisation sont associés à une trémie de récupération -18- desdits récipients couplée à un transporteur -19- alimentant en vrac la machine de redressement et d'alignement -2-.

2.- Dispositif, selon la revendication 1, caractérisé en ce que le moyen apte à saisir et à retenir chaque conditionnement porteur des récipients, est réalisé à partir de ventouses -10- situées à l'intérieur des mâchoires de la pince.

3.- Dispositif, selon la revendication 1, caractérisé en ce que le moyen apte à retourner chaque conditionnement porteur des récipients, est réalisé à partir d'une poutre -5-, sur laquelle se déplace linéairement d'un mouvement de va et vient la pince à mâchoires, ladite poutre étant animée d'un mouvement de rotation par paliers de 180 degrés.

4.- Dispositif, selon la revendication 3, caractérisé en ce que la poutre comporte une deuxième pince -17-, se déplaçant également linéairement d'un mouvement de va et vient opo sé au précedent, ladite pince étant également entraînée en rotation par le mouvement de la poutre.

5.- Procédé d'alimentation en vrac d'une machine de redressement et d'alignement de récipients couplée à une chaîne d'embouteillage, lesdits récipients étant disposés en position verticale sur le fond de conditionnements divers empilés sur une table élévatrice se déplaçant verticalement palier par palier, ledit procédé consistant à dépalettiser niveau par niveau, lesdits conditionnements et récipients, caractérisé en ce que la dépalettisation consiste:

a) à saisir chaque conditionnement porteur des récipients et à le retourner tout en le retenant, de manière à libérer par gravité lesdits récipients;

b) à récuperer lesdits récipients, tombant par gravité, dans une trémie couplée à un transporteur alimentant en vrac la machine de redressement et d'alignement.

FIG 1

FIG 2

EP 0 373 091 A1

FIG 3

EP 0 373 091 A1

17　9

18

20

6

FIG 4

FIG 5

EP 0 373 091 A1

FIG 6

FIG 7

FIG 8

EP 0 373 091 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-3 543 949 (WEIER)<br>* Colonne 1, lignes 4-14; colonne 2, ligne 3 - colonne 3, ligne 35; figures 1-4 * | 1,3,5 | B 65 G 59/02 |
| D,A | US-A-2 729 344 (BIRCHALL)<br>* Colonne 3, ligne 54 - colonne 4, ligne 23; colonne 5, ligne 57 - colonne 6, ligne 3; colonne 6, lignes 38-43; colonne 7, lignes 20-34; figures 1-6 * | 1,5 | |
| D,A | FR-A-2 585 681 (H & K VERPACKUNGSTECHNIK GmbH)<br>* En entier * | 1,3,5 | |
| A | US-A-2 453 077 (NEWTON)<br>* Colonne 1, lignes 1-7; colonne 3, ligne 36 - colonne 4, ligne 15; figures * | 1,5 | |
| A | FR-A-2 316 159 (OCIP)<br>* Page 2, lignes 24-35; page 4, ligne 7 - page 5, ligne 9; figures * | 1,5 | **DOMAINES TECHNIQUES RECHERCHES (Int. Cl.5)**<br><br>B 65 G |
| A | DE-A-2 209 698 (EISGRUBER)<br>* Page 6, ligne 19 - page 8, ligne 21; figures 1,2 * | 1,3-5 | |
| D,A | FR-A-2 543 926 (MARTI) | | |

Le présent rapport a été établi pour toutes les revendications

| Lieu de la recherche | Date d'achèvement de la recherche | Examinateur |
|---|---|---|
| LA HAYE | 07-03-1990 | VAN DER ZEE W.T. |